# EUROPEAN PATENT SPECIFICATION

(11) **EP 1 494 970 B1**
(45) Date of publication and mention of the grant of the patent: **08.10.2008**
(21) Application number: 02718703.8
(22) Date of filing: 24.04.2002
(51) Int. Cl.: C02F 1/24, B01D 19/02, B01D 21/24, B03D 1/12

(54) **APPARATUS FOR STOCK RAISING**
VORRICHTUNG ZUR AUFZUCHT VON VIEH
APPAREIL D'ELEVAGE

(30) Priority: 15.04.2002 KR 2002020494
(43) Date of publication of application: 12.01.2005
(73) Proprietor: Kim, Kyung Wong, Jeonla-do 506-258 (KR)
(72) Inventor: Kim, Kyung Wong, Jeonla-do 506-258 (KR)
(74) Representative: Arena, Giovanni
(86) International application number: PCT/KR2002/000752
(87) International publication number: WO 2003/089375

(56) References cited:
- JP-A- 2000 140 892
- JP-A- 2001 224 905
- KR-B1- 100 306 224
- US-A- 5 693 222
- US-B1- 6 190 566
- PATENT ABSTRACTS OF JAPAN vol. 009, no. 278 (C-312), 6 November 1985 (1985-11-06) & JP 60 125214 A (YASUKAWA DENKI SEISAKUSHO KK), 4 July 1985 (1985-07-04)

## Description

### Technical Field

The present invention relates to a sludge treatment apparatus in an oxidized and dissolved air floating way, wherein the sludge that is the non-degradable materials caused in the treatment of livestock excretions, and more particularly, to a sludge treatment apparatus in an oxidized and dissolved air floating way that can treat, in continuous and automatic ways, livestock excretions with physical means such as a solid-liquid separating and high-speed dehydrating device, an agitating device, an air supply device, a foams removing device, and a fog flotation device.

### Background Art

Generally, a great large amount of excretions are necessarily produced in livestock farms, and since they contain a large quantity of water and sludge therein, it causes much time and high cost in treating them. In addition, a severe offensive odor occurs when the organic materials in the excretions are dissolved, and thereby, other pathogenic bacteria are grown spontaneously, which is of course bad for health. This problem should be first solved in wastewater treatment.

The sludge generally exhibits the following properties: first, materials causing a high degree of impurity are frequently varied according to temperature and humidity; and non-degradable materials such as organic materials, inorganic materials, albumin, and fibroid materials are produced.

Moreover, deposition is induced such that an aeration tank and a blower are often clogged, which causes the excretions treatment to stop.

Among existing livestock excretions treatment methods, three methods are widely used, first of which is a method for applying the excretions as liquid manure or compost, without any process, second of which is an active sludge treatment method using water treatment facilities, and third of which is a high-speed fermenting method for fermenting the excretions at a high speed by applying a moisture regulating agent therein and utilizing the fermented excretions as compost or the materials of the compost.

In case of applying the excretions as fertilizer without any process, however, there occur some problems that when it rains, water passing through the excretions makes surrounding environment and subsurface water seriously contaminated, and the heavy metals contained in the excretions are applied as fertilizer without any filtering, which makes crops and soil undesirably devastated.

Even in case of the active sludge treatment method, there occurs a problem that much expense is consumed for treatment facilities and maintenance, such that it cannot be practically used in small or medium farms.

The high-speed fermenting method cannot be also free from the problem as mentioned above.

At present, to solve these problems encountered in the conventional excretions treatment methods there is provided a method for reducing the weight of the excretions or making them dried by using external energies.

Since the conventionally developed excretions treatment method adopts a biological excretions treatment, however, they cannot avoid the following problems: first, air is not supplied enough to activate microorganisms or a design for air supply process is not adequate for the reduction of the weight of the excretions, such that the loss in quantity of the excretions does not reach the reduction of 10 to 30 %; and second, unnecessary devices are installed and the foams formed during the treatment are not well removed, thereby making it difficult to achieve the reduction of the weight of the excretions.

### Disclosure of Invention

To solve the above-described problems, it is an object of the present invention to provide a sludge treatment apparatus in an oxidized and dissolved air floating way that changes a biological livestock excretions treatment used in conventional practices into a physicochemical livestock excretions treatment, which is an improvement in Korean Patent Application No. 99-17038 on May 12, 1999, entitled 'a method for treating livestock excretions and an apparatus thereof, as filed by the same applicant as in the present invention; Korean Patent No. 306228, which entitled 'a most basic solid-liquid separator for purifying livestock excretions, sewage and wastewater; Korean Utility Model Application Nos. 20-2001-0023605 and 20-2001-0023606, which entitled 'an apparatus for fermenting stale urine and spraying the stale urine in a fog floating way'; Korean Patent No. 10-2001-306224, which discloses an oxidized air flotation apparatus, wherein the improvement includes the steps of separating sludge and urine by using a solid-liquid separating and high-speed fermenting and dehydrating device, and making the water and microorganisms contained in foams minute and evaporated by using an aeration device and a defoamer used as a mixing and agitating device and by using a foam removing device, such that the series of treatment steps are carried out continuously and automatically by using mechanical devices, which enables the livestock excretions to be treated within a relatively short period of time and also enables the treated excretions to be recycled.

The present inventor has made various studies to improve the above-referenced prior art (Korean Patent No. 306228, which entitled 'a most basic solid-liquid separator for purifying livestock excretions, sewage and wastewater') wherein sludge is oxidized to eliminate only a small amount of sludge by a defoamer and as a result, he has provided a sludge treatment apparatus to which an oxidization system is applied from the pre-step of the wastewater treatment to the post-step thereof.

To accomplish this and other objects of the present invention, there is provided a sludge treatment apparatus in an oxidized and dissolved air floating way, which includes: a first treatment tank P, to which excretions treatment liquid from an excretions liquid retaining tank O on the one side thereof is passed, having an aeration device 5 in which two aeration pumps 5-1 and one convey pump 2A are disposed in parallel relation with each other in the lower portion of the interior of the first treatment tank P, having a sludge moving pipe 9 disposed on the upper portion thereof for connecting to a first defoamer 11A-1, having a fog flotation treatment device 12 disposed on the upper portion thereof for connecting to the convey pump 2A by a convey pipe 4, and having an overpass pipe 10-1 for conveying the treated sludge to a second treatment tank Q; the second treatment tank Q having an aeration device 5 in which one aeration pump 5-1 and one convey pump 2A are disposed in parallel relation with each other in the lower portion of the interior thereof, having a sludge moving pipe 9 disposed on the upper portion thereof for connecting to a second defoamer 11A-2, having a fog flotation treatment device 12 disposed on the upper portion thereof for connecting to the convey pump 2A by a convey pipe 4, and having an overpass pipe 10-2 for conveying the treated sludge to a third treatment tank R; the third treatment tank R having one aeration pump 5-1 disposed in the lower portion of the interior thereof, having a sludge moving pipe 9 disposed on the upper portion thereof for connecting to a third defoamer 11A-3, and having a fog flotation treatment device 12 disposed on the one side of the upper portion; a dissolved air flotation sludge eliminating device 400A installed in the interior of a dissolved air flotation treatment tank S formed on the one side thereof, in which three independent units in parallel relation with each other in which final foams and sludge are treated, the first unit composed of the first defoamer 11A-1 and a dissolved air flotation part 14A-1 connected to the lower part of the first defoamer 11A-1, the second unit composed of the second defoamer 11A-2 and a dissolved air flotation part 14A-2 connected to the lower part of the second defoamer 11A-2, and the third unit composed of the third defoamer 11A-3 and a dissolved air flotation part 14A-3 connected to the lower part of the third defoamer 11A-3; and a filtering device 500 disposed on the side portion of a lower overpass pipe 10-3 and having active carbon layers 501 and sand layers 502 formed in turn therein and a discharging pipe 18 for discharging the filtered liquid.

### Brief Description of the Drawings

Further objects and advantages of the invention can be more fully understood from the following detailed description taken in conjunction with the accompanying drawings, in which:
FIG. 1 is a detailed view of a sludge treatment apparatus in an oxidized and dissolved air floating way according to the present invention;
FIG. 2 is a detailed view of a solid-liquid separating and high-speed dehydrating device in the sludge treatment apparatus according to the present invention;
FIG. 3 is a detailed view of the high-speed dehydrating device in the sludge treatment apparatus according to the present invention;
FIG. 4 is a detailed view of a vibrator in the sludge treatment apparatus according to the present invention;
FIG. 5 is a detailed view of one of aeration devices in the sludge treatment apparatus according to the present invention;
FIG. 6 is a detailed view of a dissolved air flotation sludge treatment device in the sludge treatment apparatus according to the present invention;
FIG. 7 is a detailed view of a dissolved air flotation part in the sludge treatment apparatus according to the present invention;
FIG. 8 is a detailed view of defoamers in the sludge treatment apparatus according to the present invention;
FIG. 9 is a detailed view of a fog flotation sprayer in the sludge treatment apparatus according to the present invention;
FIG. 10 is a detailed view of another fog flotation sprayer in the sludge treatment apparatus according to the present invention; and
FIG. 11 is a detailed view of a filtering device in the sludge treatment apparatus according to the present invention.

### Best mode for Carrying Out the Invention

Now, an explanation of the preferred embodiments of the present invention will be described with reference to accompanying drawings.

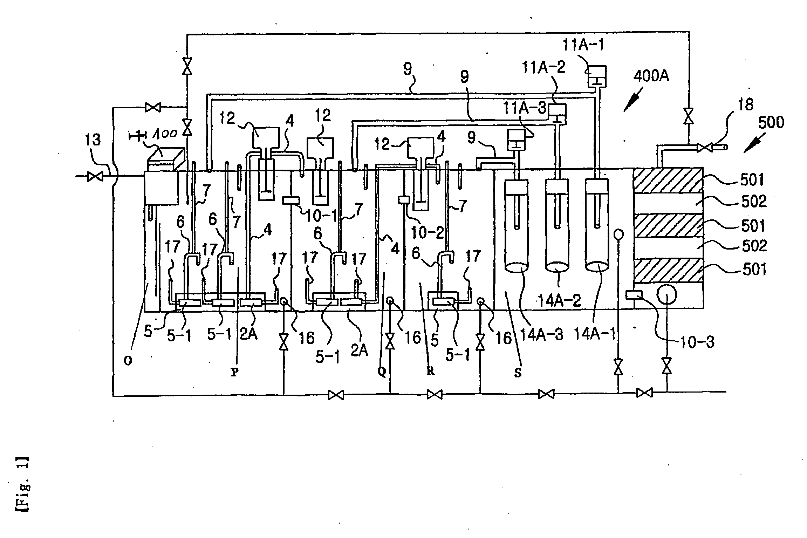

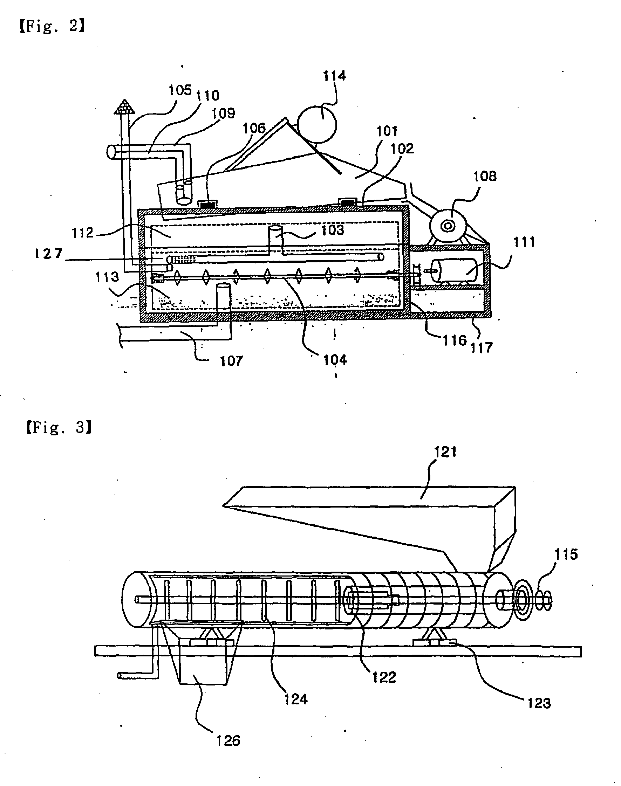

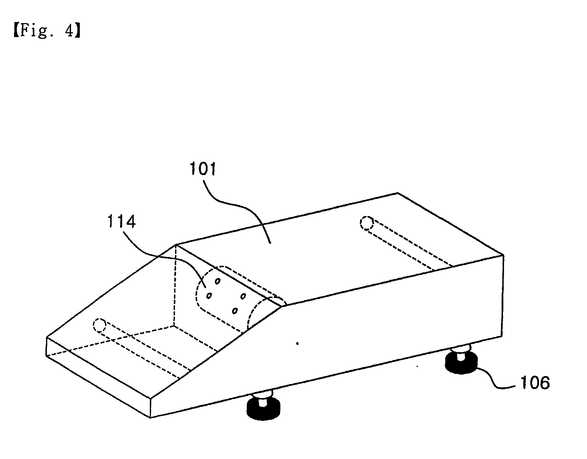

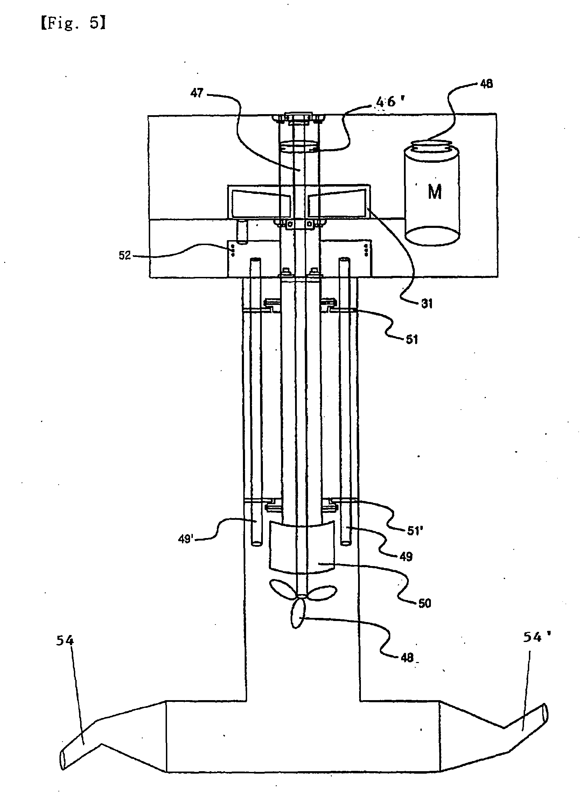

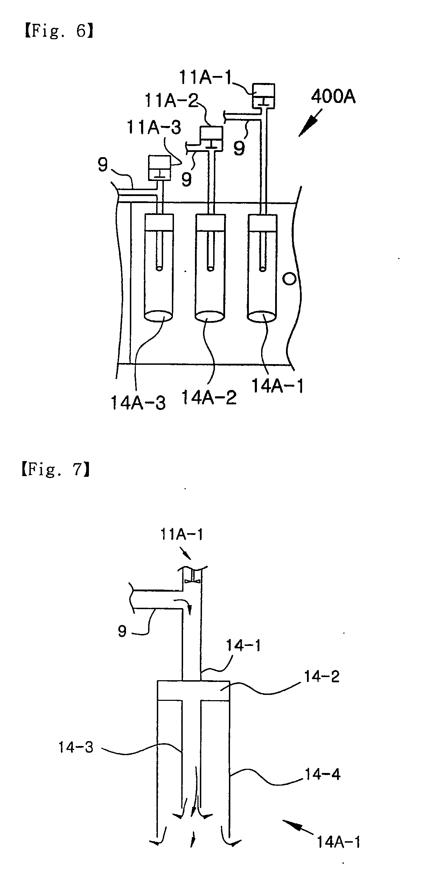

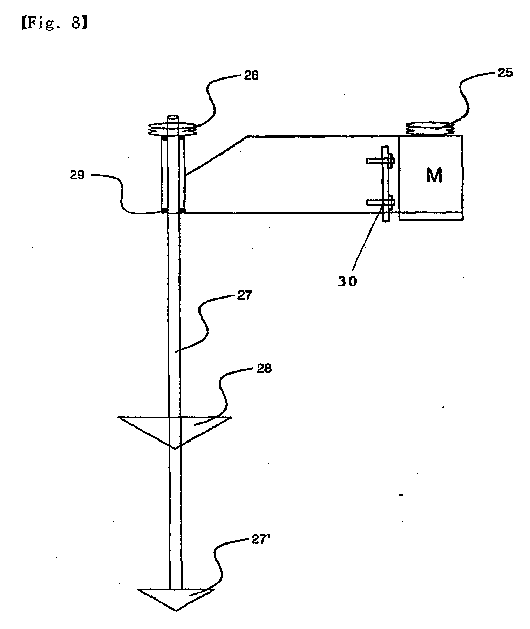

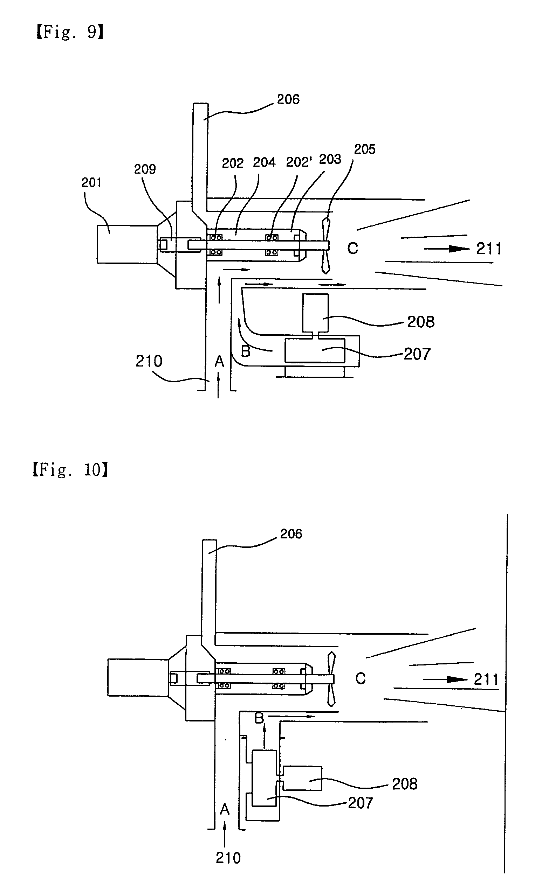

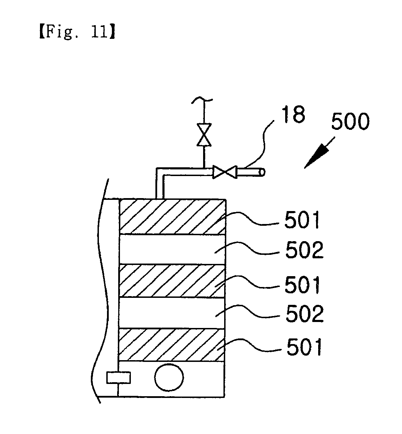

FIG. 1 is a detailed view of a sludge treatment apparatus in an oxidized and dissolved air floating way according to the present invention, FIG. 2 is a detailed view of a solid-liquid separating and high-speed dehydrating device in the sludge treatment apparatus according to the present invention, and FIG. 3 is a detailed view of the high-speed dehydrating device in the sludge treatment apparatus according to the present invention. FIG. 4 is a detailed view of a vibrator in the sludge treatment apparatus according to the present invention, FIG. 5 is a detailed view of one of aeration devices in the sludge treatment apparatus according to the present invention, FIG. 6 is a detailed view of a dissolved air flotation sludge treatment device in the sludge treatment apparatus according to the present invention, and FIG. 7 is a detailed view of a dissolved air flotation part in the sludge treatment apparatus according to the present invention. FIG. 8 is a detailed view of defoamers in the sludge treatment apparatus according to the present invention, FIG. 9 is a detailed view of a fog flotation sprayer in the sludge treatment apparatus according to the present invention, FIG. 10 is a detailed view of another fog flotation sprayer in the sludge treatment apparatus according to the present invention, and FIG. 11 is a detailed view of a filtering device in the sludge treatment apparatus according to the present invention. In the drawings of the present invention, a convey pump is denoted by 2A, a sensor 3, a convey pipe 4, an aeration device 5, an aeration pump 5-1, an aeration circulation pipe 6, an expiration pipe 7, a sludge moving pipe 9, a circulation through hole 10, overpass pipes 10-1 and 10-2, a lower overpass pipe 10-3, defoamers 11A-1, 11A-2, and 11A-3, a fog flotation treatment device 12, a solid (sludge) discharging hole 13, a first dissolved air flotation part 14A-1, a second dissolved air flotation part 14A-2, a third dissolved air flotation part 14A-3, a dissolved air flotation inducing pipe 14-1, a dissolved air flotation cross pipe 1.4-2, a dissolved air flotation cross pipe lower part 14-3, a dissolved air flotation double pipe 14-4, a cover (not represented in the figure, a drain 16, an aeration motor suction pipe 17, a discharging pipe 18, aeration device belt connecting holes 46 and 46', an aeration shaft 47, an aeration impeller 48, an air inlet 49, a suction hole 50, bushings 51 and 51', a blower 52, ejecting pipes 54 and 54', a defoamer belt upper part connecting hole 25, a defoamer belt lower part connecting hole 26, a defoamer shaft 27, a second defoamer impeller 27', a first defoamer impeller 28, a bearing 29, a motor fixing hole 30, an aeration cylinder 31, a solid-liquid separating and high-speed dehydrating device 100, a vibrator 101, a vibrating plate screen 102, a water pressure sprayer 103, a gas generating screw 104, a gas emitting pipe and fan 105, a discharging water pipe 107, a screw type high speed dehydrating unit 108, a water supply pipe 109, an excretions inlet 110, a gas generating screw motor 111, a separated and dewatered excretions retaining tank 112, a gas eliminating retaining tank 113, a vibrating motor 114, a dehydrating motor 115, a truss 116, a case 117, an excretions inlet 121, a mechanical chamber 122, a vibrating rubber plate 123, a knife edge 124, an external net 125, a sludge discharging hole 126, motors 201 and 208, bearing 202 and 202', an oil seal 203, a wing shaft 204, a wing 205, an oxygen supply pipe 206, a fog flotation fan 207, a connector 209, an inlet 210, an outlet 211, a dissolved air flotation sludge eliminating device 400A, a filtering device 500, an active carbon layer 501, a sand layer 502, a foam moving pipe A, an air moving pipe B, a contact part between foams and air C, an excretions liquid retaining tank O, a first treatment tank P, a second treatment tank Q, a third treatment tank R, and a dissolved air flotation treatment tank S.

As shown in FIG. 1, there are disposed a solid-liquid separating and high-speed dehydrating device 100 that separates the excretions discharged from a stable to a collecting tank in which water fills into solids and liquid, an excretions liquid retaining tank O disposed on the lower portion of the solid-liquid separating and high-speed dehydrating device 100 for storing the separated excretions liquid, a first treatment tank P placed on the one side of the excretions liquid retaining tank O for treating the excretions liquid passing through the excretions liquid retaining tank O, the first treatment tank P provided with an aeration device 5 in which two aeration pumps 5-1 and one convey pump 2A are disposed in parallel relation with each other in the lower portion of the interior thereof, with an aeration motor suction pipe 17 and an aeration circulation pipe 6 each connected to the one side of each of the aeration pumps 5-1 therein for sucking and circulating the aerated liquid, with an expiration pipe 7 connected to the aeration circulation pipe 6 in the lower portion from the upper portion thereof, with a drain 16 disposed on the other side of the lower portion thereof for discharging the liquid filled therein if necessary, with an overpass pipe 10-1 disposed on the one side of the intermediate part of the upper portion thereof for passing the aerated liquid to a second treatment tank Q, with a sludge moving pipe 9 placed on the upper portion thereof, with a first defoamer 11A-1 of a dissolved air flotation treatment tank S connected by virtue of the sludge moving pipe 9, and with a fog flotation treatment device 12 that is disposed on the other side of the upper portion thereof, the fog flotation treatment device 12 connected to the convey pipe 2A therein of the aeration device 5 by a convey pipe 4, on the one side thereof and discharging the treated excretions liquid to the second treatment tank Q adjacent thereto through the convey pipe 4 connected to the other side thereof.

The second treatment tank Q, which is formed on the one side of the fog flotation treatment device 12 of the first treatment tank P, treats the excretions liquid flowing from the first treatment tank P by means of an overpass pipe 10-1. The second treatment tank Q is provided with an aeration device 5 in which one aeration pump 5-1 and one convey pump 2A are disposed in parallel relation with each other in the lower portion of the interior thereof, with an aeration motor suction pipe 17 and an aeration circulation pipe 6 each connected to the one side of the aeration pump 5-1 therein for sucking and circulating the aerated liquid, with an expiration pipe 7 connected to the aeration circulation pipe 6 in the lower portion from the upper portion thereof, with a drain 16 disposed on the other side of the lower portion thereof for discharging the liquid filled therein if necessary, with an overpass pipe 10-2 disposed on the one side of the intermediate part of the upper portion thereof for passing the aerated liquid to a third treatment tank R, with the fog flotation treatment device 12 that is disposed on the upper portion thereof for treating the excretions liquid flowing thereto, with a sludge convey pipe 9 placed on the one side of the upper portion thereof, with a second defoamer 11A-2 of the dissolved air flotation treatment tank S connected by virtue of the sludge convey pipe 9, and a convey pipe 4 connecting the convey pump 2A therein to a fog flotation treatment device 12 of the third treatment tank R adjacent to the second treatment tank Q.

The third treatment tank R, which is formed on the one side of the second treatment tank Q, treats the excretions liquid of the second treatment tank Q flowing through the one side convey pipe 4 of the fog flotation treatment device 12 and the overpass pipe 10-2. The third treatment tank R is provided with an aeration device 5 in which one aeration pump 5-1 is disposed in the lower portion of the interior thereof, with an aeration motor suction pipe 17 and an aeration circulation pipe 6 each connected to the one side of the aeration pump 5-1 for sucking and circulating the aerated liquid, with an expiration pipe 7 connected to the aeration circulation pipe 6 in the lower portion from the upper portion thereof, with a drain 16 disposed on the other side of the lower portion thereof for discharging the liquid filled therein if necessary, with a sludge convey pipe 9 placed on the one side of the upper portion thereof, and with a third defoamer 11A-3 of the dissolved air flotation treatment tank S connected by virtue of the sludge convey pipe 9.

A dissolved air flotation sludge eliminating device 400A, which is formed on the one side of the third treatment tank R, includes the three defoamers 11A-1, 11A-2 and 11A-3 and three dissolved air flotation parts 14A-1, 14A-2 and 14A-3 correspondingly thereto, each of which is connected by a dissolved air flotation inducing pipe 14-1. Further, the device 400A is provided with a sludge discharging pipe 15 for discharging the treated liquid in the three dissolved air flotation parts 14A-1, 14A-2 and 14A-3 to the dissolved air flotation treatment tank S and with a lower overpass pipe 10-3 for passing the treated liquid to a filtering device 500. The filtering device 500 is disposed on the one side of the dissolved air flotation treatment tank S for filtering the treated liquid flowing through the lower overpass pipe 10-3, the filtering device 500 having an active carbon layer 501 and a sand layer 502 piled in turn therein and a discharging pipe 18 formed on the upper portion thereof for discharging the treated liquid to the outside.

FIG. 2 is a detailed view of the solid-liquid separating and high-speed dehydrating device 100. As shown, the device 100 includes an excretions inlet 110, a water supply pipe 109, a vibrator 101 and a vibrating plate screen 102. On the lower end of the device 100 are provided a separated and dewatered excretions retaining tank 112 and a water pressure sprayer 103 connected to a pipe formed of a SUS net of 2mm. A gas generating screw 104 is formed on the lower portion of the water pressure sprayer 103, and a gas eliminating retaining tank 113 and a discharging water pipe 107 are formed on the lower portion of the gas generating screw 104. On the side portion of the above-mentioned parts are provided a screw type high speed dehydrating part 108 and a gas generating screw motor 111, and on the other side portion thereof is provided a gas emitting pipe and fan 105.

FIG. 3 is a detailed view of a high-speed fermenting dehydrating part 108, which is provided with an excretions inlet 121, a gas generating screw motor 114, a mechanical sealing 122 disposed on the connected portion between the motor and the dehydrating part, eight knife edges 124, an external net (not represented in the figure), the SUS net 127, a sludge discharging hole 126, and a vibrating rubber plate 123 disposed on the lower support stand of the dehydrating part.

FIG. 4 is a detailed view of the vibrator 101, which is provided with the vibrating plate screen 102 of 0.1 m² in thickness on the lower portion thereof.

FIG. 5 is a detailed view of the aeration device 5. The aeration device 5 is provided with a motor having aeration device belt connecting holes 46 and 46' connected by a belt with an aeration shaft 47, on the upper portion thereof, and with an aeration impeller 48 disposed on the lower portion of the aeration shaft 47 in the interior of an aeration cylinder 31. The aeration device 5 is provided with eight air inlets 49 arranged around the aeration shaft 47, a suction hole 50 formed on the lower portion of the intermediate part of the aeration cylinder 31, bushings 51 and 51' rotating the aeration cylinder 31, a heater 52 disposed on the upper portion of the aeration cylinder 31, ejecting pipes 54 and 54' mounted horizontally on the lower portion of the aeration cylinder 31, and a blower 31 disposed from the upper portion of the aeration device 5 and to the upper portion of the aeration cylinder 31.

FIG. 6 is a detailed view of the dissolved air flotation sludge eliminating device 400A, which is installed in the dissolved air flotation treatment tank S.

The device 400A is provided with the first unit that is comprised of the first defoamer 11A-1 connected by means of the sludge moving pipe 9 to the first treatment tank P and the first dissolved air flotation part 14A-1 disposed in the interior of the dissolved air flotation treatment tank S and connected to the lower portion of the first defoamer 11A-1 by the dissolved air flotation inducing pipe 14-1, with the second unit that is comprised of the second defoamer 11A-2 connected by means of the sludge moving pipe 9 to the second treatment tank Q and the second dissolved air flotation part 14A-2 disposed in the interior of the dissolved air flotation treatment tank S and connected to the lower portion of the second defoamer 11A-2 by the dissolved air flotation inducing pipe 14-1, and with the third unit that is comprised of the third defoamer 11A-3 connected by means of the sludge moving pipe 9 to the third treatment tank R and the third dissolved air flotation part 14A-3 disposed in the interior of the dissolved airs flotation treatment tank S and connected to the lower portion of the third defoamer 11A-2 by the dissolved air flotation inducing pipe 14-1.

The first dissolved air flotation part 14A-1, the second dissolved air flotation part 14A-2, and the third dissolved air flotation part 14A-3 are independently arranged in the parallel relation with each other and connected to the lower portions of the first to third defoamers 11A-1 to 11A-3 by means of each of the dissolved air flotation inducing pipes 14-1. Each of the first to third dissolved air flotation parts 14A-1 to 14A-3 is provided with a dissolved air flotation cross pipe 14-2 connected to the dissolved air flotation inducing pipe 14-1, a dissolved air flotation cross lower pipe 14-3 extended from the lower portion of the dissolved air flotation cross pipe 14-2 and opened on the lower portion thereof, a dissolved air flotation double pipe 14-4 having a double form to surround the dissolved air flotation cross pipe 14-2 and opened on the lower portion thereof, and a cover (not represented in the figure) formed on the outside of the dissolved air flotation double pipe 14-4.

FIG. 8 is a detailed view of the defoamer 11A-1, which is provided with a defoamer shaft 27 connected to a defoamer belt connecting hole 25 of a motor by a belt, a second defoamer impeller 27' disposed on the lower portion of the defoamer shaft 27, and a first defoamer impeller 28 disposed on the intermediate portion of the defoamer shaft 27. In this case, the second defoamer impeller 27' is smaller by 1/2 in size than the first defoamer impeller 28. A reference numeral 29 represents a bearing and 30 represents a motor fixing hole.

FIGS. 9 and 10 are detailed views for a fog flotation sprayer in the sludge treatment apparatus according to the present invention. The fog flotation sprayer is provided with a foams moving pipe A through which foams flow, a spraying part formed on the one side of the upper portion of the foams moving pipe A, an air moving pipe B and an air moving portion formed on the side portion of the one side of the foam moving pipe A and on the lower portion of a wing 205 of the spraying part, an oxygen supply pipe 206 for preventing the vacuum state of the wing 205 and for supplying oxygen at the time of spraying fog, and an outlet 211 having an air contact part C on which air is met with the foams such that the foams are broken and ejected in a fog form.

The spraying part, which is formed horizontally on the upper portion of the foams moving pipe A, is provided with a motor 201, a connector 209 connected to the motor 201, a wing shaft 204 connected to the connector 209, the wing 205 formed on the end of the wing shaft 204, and an oil seal 203 formed on the external surface of the wing shaft 204 and surrounding the wing shaft 204 by bearings 202 and 202'.

The air moving portion, which is formed on the one side of the foams moving pipe A, is provided with a fan 207 and the air moving pipe B through which the air produced from the fan 207 is passed.

As shown in FIG. 11, the filtering device 500 is provided with the sand layer 502 formed on the lowermost portion thereof and the active carbon layer 501 formed on the upper surface of the sand layer 502, which layers are formed three times and with the discharging hole 18 formed on the upper portion thereof. If the liquid flows from the lower overpass pipe 10-3 connected to the lower portion of the dissolved air flotation treatment tank S, it is raised upwardly and passed through the sand layer 502 and the active carbon layer 501 three times such that it is filtered and discharged through the discharging hole 18.

In operation, the excretions of the water tank are separated into solids and liquid through the solid-liquid separating and high-speed dehydrating device 100, and the separated solids are discharged through a solid excretions discharging hole 13 and used as fertilizer.

The separated liquid excretions are over-passed to the first treatment tank P from the liquid excretions retaining tank O and are treated by the aeration device 5 in which the two aeration pumps 5-1 and the one convey pump 2A are disposed in parallel relation with each other in the first treatment tank P, such that it has a density of BOD and SS having a predetermined value wherein when the flowing water is 80,000, it is 15,000 or less. Next, the part of the liquid excretions is conveyed to the second treatment tank Q on the side surface through the overpass pipe 10-1, and the foams thereof are conveyed to the dissolved air flotation treatment tank S through the sludge moving pipe 9 formed on the upper portion thereof and connected to the first defoamer 11A-1 of the dissolved air flotation treatment tank S, and another part of the liquid excretions is treated to the fog flotation treatment device 12 connected by the convey pipe 4 to the convey pump 2A of the aeration device 5 on the lower portion of the first treatment tank P and is then conveyed to the second treatment tank Q.

The liquid excretions treated from the first treatment tank P are treated in the second treatment tank Q by the aeration device 5 in which the one aeration pump 5-1 and the one convey pump 2A are disposed in parallel relation with each other and the fog flotation treatment device 12 disposed on the one side of the upper portion thereof, such that the treated liquid has densities of BOD and SS having a predetermined value wherein it is between 15,000 and 50,000. Next, the treated liquid is over-passed to the third treatment tank R by the overpass pipe 10-1 formed on the one side of the intermediate upper portion of the second treatment tank Q, and the foams thereof are conveyed to the second defoamer 11A-2 of the dissolved air flotation treatment tank S through the sludge moving pipe 9 formed on the one side of the upper portion thereof.

The liquid excretions treated from the second treatment tank Q are treated in the third treatment tank R by the aeration device 5 in which the one aeration pump 5-1 is disposed and by the fog flotation treatment device 12. Next, the foams are conveyed to the third defoamer 11A-3 of the dissolved air flotation treatment tank S through the sludge moving pipe 9 formed on the upper portions thereof and completely removed, with a result that the ratio of eliminating the sludge is 90 % or more. Then, the liquid in the third treatment tank R is discharged through the drain 16.

In the dissolved air flotation treatment tank S formed on the one side of the third treatment tank R, the foams conveyed through the sludge moving pipe 9 from each of the first to third treatment tanks P, Q, and R are treated in the sludge eliminating device 400A having the three sets comprised of the first to third defoamers 11A-1, 11A-2, and 11A-3 and the first to third dissolved air flotation parts 14A-1, 14A-2, and 14A-3. The treated liquid is conveyed through the lower overpass pipe 10-3 to the filtering device 500 disposed on the one side of the dissolved air flotation treatment tank S, is passed from the lower portion to upper portion of the filtering device 500 in which the active carbon layer 501 and the sand layer 502 are in turn formed, and is discharged through the discharging pipe 18. If the filtered liquid is not discharged by an unexpected accident, or if necessary, it is returned to the first treatment tank P through a returning pipe connected to the discharging pipe 18 and then retreated. And, the filtered liquid can be discharged directly through the drain 16 formed on the lower portion of each of the treatment tanks P, Q, R, and S.

According to the operation method of the solid-liquid separating and high-speed dehydrating device 100, the high-speed dehydrating unit 108, and the vibrator 101, as shown in FIGS. 2 to 4, the waste excretions are discharged from the excretions inlet 110 of the solid-liquid separating and high-speed dehydrating device 100, and at the same time, water is supplied from the water supply pipe 109. The waste excretions and the water are induced to the vibrator 101 and the vibrating plate screen 102 and partially conveyed to the lower portion of the solid-liquid separating and high-speed dehydrating device 100 by the vibrating plate screen 102 by the operation of the vibrator 101. The separated liquid excretions are moved through the water pressure of the water pressure sprayer 103 connected to the pipe formed of the SUS net 127 and is then conveyed to the separated and dewatered excretions retaining tank 112 and to the gas eliminating retaining tank 113, where the containing values of ammonia, phosphorus, or methane mixed with the liquid excretions are lowered by using a net of 3m².

The gas generating screw 104 disposed in the separated and dewatered excretions retaining tank 112 is adapted to rotate by the gas generating screw motor 113 to separate the liquid excretions conveyed through the water pressure sprayer 103 such that the methane gas mixed in the liquid excretions is separated.

As a result, the offensive odor and the methane gas are eliminated in the preparation fermenting tank upon movement to the aeration circulation pipe 6, and the gas emitting pipe and fan 105 is adapted to discharge the gas generated from the gas eliminating retaining tank 113 and the separated gas by the gas generating screw 104 to the outside.

When the excretions sludge passing through the vibrating plate screen 102 flows through the excretions inlet 121 of the high-speed dehydrating unit 108 as shown in FIG. 6 which is disposed on the side portion of the above-mentioned parts, it strikes at 3600 r.p.m. by the operation of the gas generating screw motor 115 using the high-speed rotation shaft thereof and heats such that the water therein is evaporated and fermented. The sludge is dissolved by means of the eight knife edges 124 disposed on the motor 115 and the high-speed dehydrating unit 108 such that it can be easily fermented at a high speed, and the dewatered wastewater is discharged through the external net 125 and the SUS net 127 and at the same time evaporated. The fermented sludge is discharged through the sludge discharging hole 126. The gas is stored in the gas eliminating retaining tank 113 and then discharged through the gas emitting pipe and fan 105.

According to the operation method of the aeration device 5 disposed in the interior of each of the treatment tanks, if the motor disposed on the upper portion thereof operates, as shown in FIG. 5, the aeration shaft 47 connected to the aeration device belt connecting holes 46 and 46' and the aeration impeller 48 disposed on the lower portion of the aeration shaft 47 start to rotate. As the aeration impeller 48 disposed in the interior of the aeration cylinder 31 rotates, air flows to the eight air inlets 49 from the blower 52 on the upper portion of the eight air inlets 49.

The suction hole 50 is formed on the intermediate lower portion of the aeration cylinder 31, and as the aeration cylinder 31 rotates by the bushings 51 and 51', the liquid excretions flow to the suction hole 50 and come in contact with the air from the air inlet 49. By the operation of the aeration impeller 48, the liquid excretions and the air are considerably agitated and are forced to be discharged by the guide of the discharging pipe 24 disposed horizontally on the lower portion of the aeration cylinder 31, such that the liquid excretions can be well mixed with the existing ones.

The aeration cylinder 31 may be provided with a heater 32 for adjustment to a temperature in a range between 50 and 65 °C where microorganisms are well grown, on the upper portion thereof. The normal temperature thereof is in a range between 38 and 40 °C.

According to the operation method of the dissolved air flotation sludge eliminating device 400A, as shown in FIG. 6, if the sludge liquid that is aerated in each of the treatment tanks P, Q and R is induced to the dissolved air flotation inducing pipe 14-1 through the sludge moving pipe 9, it is conveyed to each of the defoamers 11A-1, 11A-2, and 11A-3 on the upper portion of the dissolved air flotation inducing pipe 14-1. Each of the defoamers 11A-1, 11A-2, and 11A-3 connects the defoamer shaft 27 to the defoamer belt connecting hole 25 of the motor by a belt, and forms the second defoamer impeller 27' on the lowermost end of the defoamer shaft 27 and the second defoamer impeller 28 on the intermediate portion thereof. Thus, as the motor rotates, the defoamer shaft 27 and the impellers 27' and 28 connected thereto are allowed to evaporate the minute particles of the broken liquid, and if the foams are raised toward the center by the rotation of the first defoamer impeller 28, they are broken by the second defoamer impeller 27' and changed into the sludge liquid. The sludge liquid is conveyed to the dissolved air flotation cross pipe 14-2 of each of the first to three dissolved air flotation parts 14A-1 to 14A-3 connected through the dissolved air flotation inducing pipe 14-1. For the brevity of the description, the operation method for one of the three dissolved air flotation parts will be explained.

The foams that haven't been removed are gathered and eliminated on the extended portion formed on the intermediate portion of the dissolved air flotation cross pipe 14-2, and the sludge liquid is kept moved to the lower portion thereof and is passed through the dissolved air flotation cross lower part 14-3. After it reaches the dissolved air flotation double pipe 14-4 opened on the lower portion thereof, the foams that haven't yet removed are raised and gathered on the top portion of the dissolved air flotation double pipe 14-4, on which they are removed. The sludge liquid is conveyed through the lower portion of the dissolved air flotation double pipe 14-4 within the cover 14-5 formed on the external surface of the dissolved air flotation double pipe 14-4 and is then discharged to the dissolved air flotation treatment tank S via the sludge discharging pipe 15 formed on the one side of the cover 14-5.

According to the operation method of the fog flotation sprayer, as shown in FIGS. 9 and 10, if the motor 201 operates, the connector 209 connected to the motor 201 and the wing 205 formed on the end portion of the wing shaft connected to the connector 209 start to rotate, and at the same time, the motor 208 and the fan 207 which are formed on the one side of the foams moving pipe A operate such that air is moved upward through the air moving pipe B. In this case, the air conveyed through the air moving pipe B serves as an ejector such that the foams flow along the foams moving pipe A and move while contacting with the wing 205 rotating. As a consequence, the foams are changed into a fog form by the air conveyed through the air moving pipe B and then sprayed.

At this time, the oxygen supply pipe 206 that is formed on the upper portion of the motor supplies oxygen to the fog sprayed for the purpose of preventing the rear portion of the wing 205 from being in a vacuum state.

The results of comparison of the performance and treatment in the above-mentioned parts of the apparatus according to the present invention with one of conventional products are shown by the following tables.

### 1. Aeration

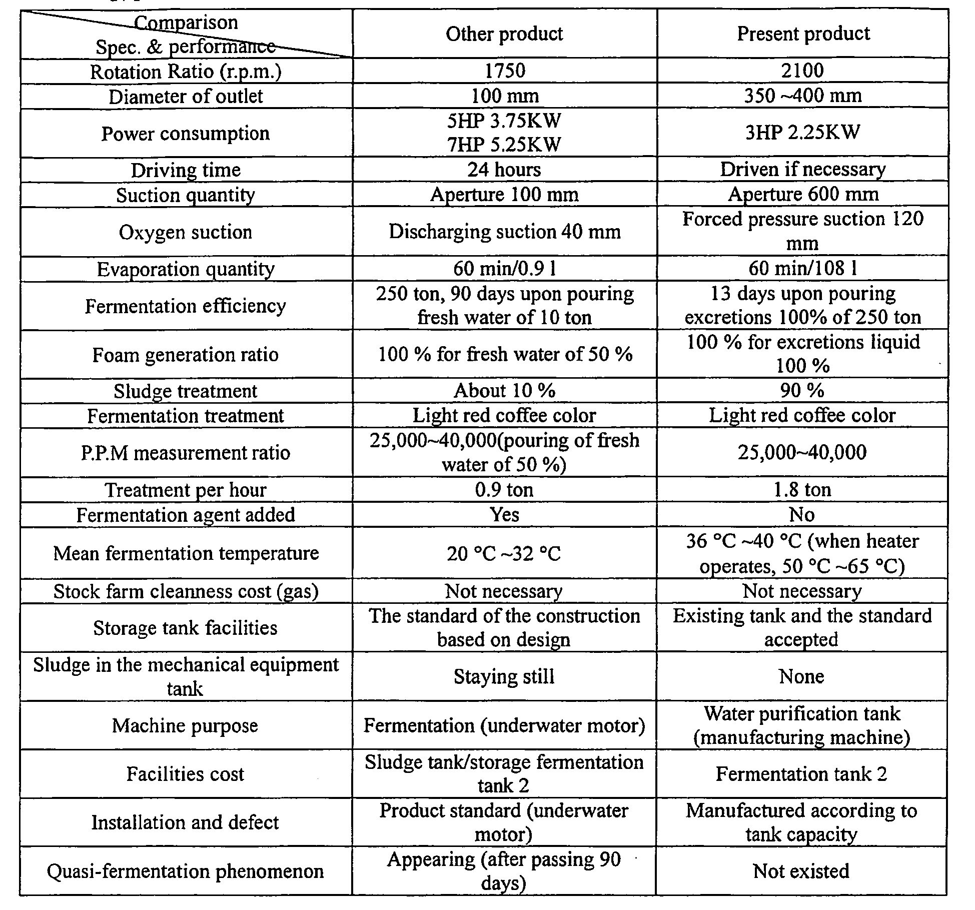

### 2. defoamer

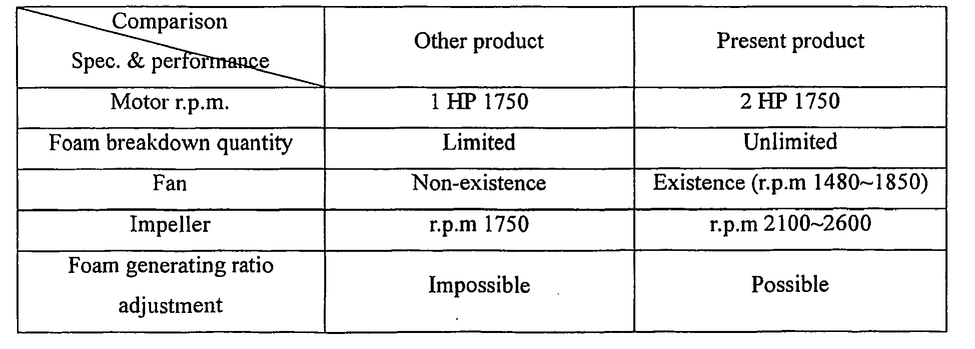

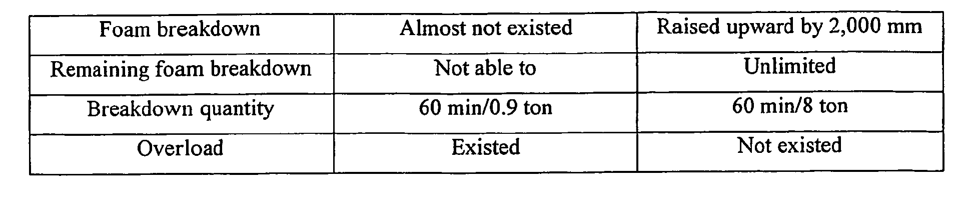

### 3. Screw press

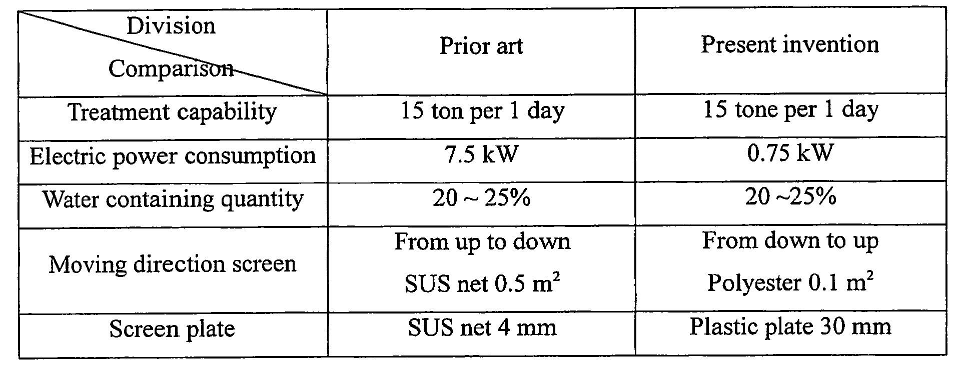

### 4. High-speed fermentation and dehydration device

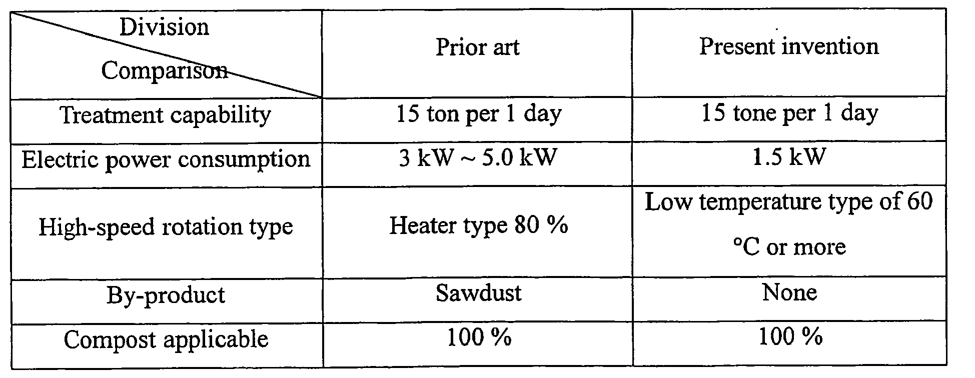

### 5. Water pressure sprayer

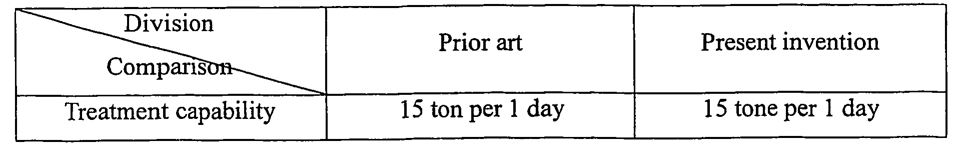

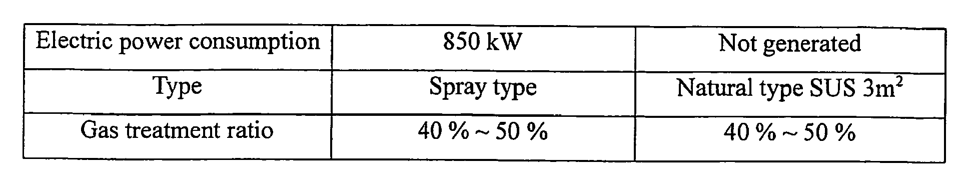

### 6. Gas generating screw

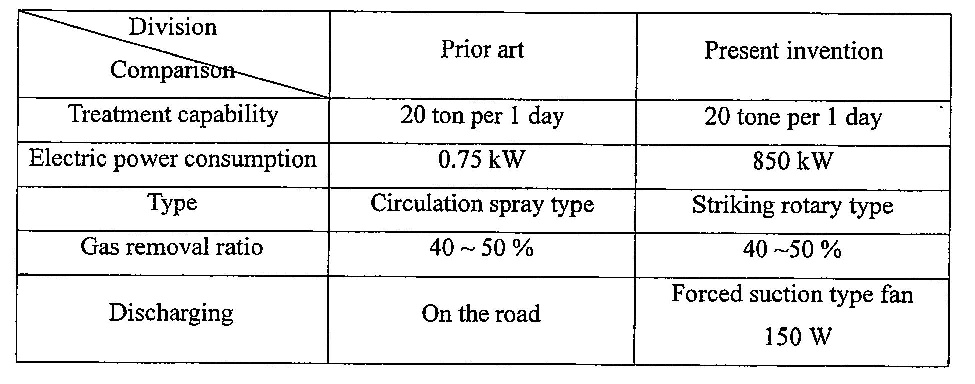

### Industrial applicability

As set forth in the foregoing, there is provided a sludge treatment apparatus in oxidized and dissolved air flotation manners that changes a biological livestock excretions treatment used in the conventional practice into a physicochemical livestock excretions treatment, thereby making it possible to reduce the excretions treatment expense to a quite low extent. Basically using microorganisms, this is achieved by dissolving the 100% livestock excretions and reducing the weight thereof and using mechanical devices, also, this is achieved in a series of continuous and automatic treatments, whereby treatment performance is advanced, the excretions, the microorganisms and air are well mixed by using aeration devices, and the foams are removed by using defoamers, such that the yellow soil-like fermented excretions that don't have any offensive odor can be reused for making stables clean.

While the present invention has been described with reference to a few specific embodiments, the description is illustrative of the invention and is not to be construed as limiting the invention.

## Claims

1. A sludge treatment apparatus in an oxidized and dissolved air floating way, said apparatus comprising:
- a solid-liquid separating and high-speed dehydrating device (100) that separates the excretions discharged from a stable to a collecting tank in which water fills into solids and liquid,
- an excretions liquid retaining tank (O) disposed on the lower portion of the solid-liquid separating and high-speed dehydrating device (100) for storing the separated excretions liquid,
- a first treatment tank (P), to which excretions treatment liquid from the excretions liquid retaining tank (O) on the one side thereof is passed, having an aeration device (5) in which two aeration pumps (5-1) and one convey pump (2A) are disposed in parallel relation with each other in the lower portion of the interior of the first treatment tank (P), having a sludge moving pipe (9) disposed on the upper portion thereof for connecting to a first defoamer (11A-1), having a fog flotation treatment device (12) disposed on the upper portion thereof for connecting to said convey pump (2A) by a convey pipe (4), and having an overpass pipe (10-1) for conveying the treated sludge to a second treatment tank (Q); said second treatment tank (Q) having an aeration device (5) in which one aeration pump (5-1) and one convey pump (2A) are disposed in parallel relation with each other in the lower portion of the interior thereof, having a sludge moving pipe (9) disposed on the upper portion thereof for connecting to a second defoamer (11A-2), having a fog flotation treatment device (12) disposed on the upper portion thereof for connecting to said convey pump (2A) by a convey pipe (4), and having an overpass pipe (10-2) for conveying the treated sludge to a third treatment tank (R); said third treatment tank (R) having one aeration pump (5-1) disposed in the lower portion of the interior thereof, having a sludge moving pipe (9) disposed on the upper portion thereof for connecting to a third defoamer (11A-3), and having a fog flotation treatment device (12) disposed on the one side of the upper portion thereof;
- a dissolved air flotation sludge eliminating device (400A) installed in the interior of a dissolved air flotation treatment tank (S) formed on the one side of said third treatment tank (R), in which three independent units in parallel relation with each other in which final foams and sludge are treated, the first unit composed of said first defoamer (11A-1) and a dissolved air flotation part (14A-1) connected to the lower part of said first defoamer (11A-1), the second unit composed of said second defoamer (11A-2) and a dissolved air flotation part (14A-2) connected to the lower part of said second defoamer (11A-2), and the third unit composed of said third defoamer (11A-3) and a dissolved air flotation part (14A-3) connected to the lower part of said third defoamer (11A-3); and
- a filtering device (500) disposed on the side portion of a lower overpass pipe (10-3) and having active carbon layers (501) and sand layers (502) formed in turn therein and a discharging pipe (18) for discharging the filtered liquid.

2. The apparatus of claim 1, wherein said first treatment tank (P) is provided with said aeration device (5) in which said two aeration pumps (5-1) and said one convey pump (2A) are disposed in parallel relation with each other in the lower portion of the interior thereof, with an aeration motor suction pipe (17) and an aeration circulation pipe (6) each connected to the one side of each of said aeration pumps (5-1) therein for sucking and circulating the aerated liquid, with an expiration pipe (7) connected to said aeration circulation pipe (6) in the lower portion from the upper portion thereof, with a drain (16) disposed on the other side of the lower portion thereof for discharging the liquid filled therein if necessary, with an overpass pipe (10-1) disposed on the one side of the intermediate part of the upper portion there for passing the aerated liquid to said second treatment tank (Q), with said sludge moving pipe (9) placed on the upper portion thereof, with said first defoamer (11A-1) of said dissolved air flotation treatment tank (S) connected by virtue of said sludge moving pipe (9), and with said fog flotation treatment device (12) disposed on the other side of the upper portion thereof, said fog flotation treatment device (12) connected to said convey pipe (2A) therein of said aeration device (5) by said convey pipe (4), on the one side thereof and discharging the treated excretions liquid to said second treatment tank (Q) adjacent thereto through said convey pipe (4) connected to the other side thereof.

3. The apparatus of claim 1, wherein said second treatment tank (Q), which is formed on the one side of said fog flotation treatment device (12) of said first treatment tank (P), treats the excretions liquid flowing from said first treatment tank (P) by means of said overpass pipe (10-1), said second treatment tank (Q) provided with said aeration device (5) in which said one aeration pump (5-1) and said one convey pump (2A) are disposed in parallel relation with each other in the lower portion of the interior thereof, with an aeration motor suction pipe (17) and an aeration circulation pipe (6) each connected to the one side of said aeration pump (5-1) therein for sucking and circulating the aerated liquid, with an expiration pipe (7) connected to said aeration circulation pipe (6) in the lower portion from the upper portion thereof, with a drain (16) disposed on the other side of the lower portion thereof for discharging the liquid filled therein if necessary, with said overpass pipe (10-2) disposed on the one side of the intermediate part of the upper portion thereof for passing the aerated liquid to said third treatment tank (R), with said fog flotation treatment device (12) that is disposed on the upper portion thereof for treating the excretions liquid flowing thereto, with said sludge convey pipe (9) placed on the one side of the upper portion thereof, with said second defoamer (11A-2) of said dissolved air flotation treatment tank (S) connected by virtue of said sludge convey pipe (9), and said convey pipe (4) connecting said convey pump (2A) therein to said fog flotation treatment device (12) of said third treatment tank (R) adjacent to said second treatment tank (Q).

4. The apparatus of claim 1, wherein said third treatment tank (R), which is formed on the one side of said second treatment tank (Q), treats the excretions liquid of said second treatment tank (Q) flowing through said one side convey pipe (4) of said fog flotation treatment device (12) and said overpass pipe (10-2), said third treatment tank (R) provided with said aeration device (5) in which said one aeration pump (5-1) is disposed in the lower portion of the interior thereof, with an aeration motor suction pipe (17) and an aeration circulation pipe (6) each connected to the one side of said aeration pump (5-1) therein for sucking and circulating the aerated liquid, with an expiration pipe (7) connected to said aeration circulation pipe (6) in the lower portion thereof from the upper portion thereof, with a drain (16) disposed on the other side of the lower portion thereof for discharging the liquid filled therein if necessary, with said sludge convey pipe (9) placed on the one side of the upper portion thereof, and with said third defoamer (11A-3) of said dissolved air flotation treatment tank (S) connected by virtue of said sludge convey pipe (9).

5. The apparatus of claim 1, wherein said dissolved air flotation sludge eliminating device (400A), which is disposed in said dissolved air flotation treatment tank (S), is provided with the first unit that is comprised of said first defoamer (11A-1) connected by means of said sludge moving pipe (9) to said first treatment tank (P) and said first dissolved air flotation part (14A-1) disposed in the interior of said dissolved air flotation treatment tank (S) and connected to the lower portion of said first defoamer (11A-1) by said dissolved air flotation inducing pipe (14-1), with the second unit that is comprised of said second defoamer (11A-2) connected by means of said sludge moving pipe (9) to said second treatment tank (Q) and said second dissolved air flotation part (14A-2) disposed in the interior of said dissolved air flotation treatment tank (S) and connected to the lower portion of said second defoamer (11A-2) by said dissolved air flotation inducing pipe (14-1), and with the third unit that is comprised of said third defoamer (11A-3) connected by means of said sludge moving pipe (9) to said third treatment tank (R) and said third dissolved air flotation part (14A-3) disposed in the interior of said dissolved air flotation treatment tank (S) and connected to the lower portion of said third defoamer (11A-2) by said dissolved air flotation inducing pipe (14-1), said first dissolved air flotation part (14A-1), said second dissolved air flotation part (14A-2), and said third dissolved air flotation part (14A-3) independently arranged in the parallel relation with each other and connected to the lower portions of said first to third defoamers (11A-1 to 11A-3) by means of each of said dissolved air flotation inducing pipes (14-1), each of said first to third dissolved air flotation parts (14A-1 to 14A-3) provided with a dissolved air flotation cross pipe (14-2) connected to said dissolved air flotation inducing pipe (14-1), a dissolved air flotation cross lower pipe (14-3) extended from the lower portion of said dissolved air flotation cross pipe (14-2) and opened on the lower portion thereof, a dissolved air flotation double pipe (14-4) having a double form to surround said dissolved air flotation cross pipe (14-2) and opened on the lower portion thereof, and a cover formed on the outside of said dissolved air flotation double pipe (14-4), each of said first to third defoamers (11A-1 to 11A-3) provided with a defoamer shaft (27) connected to a defoamer belt connecting hole (25) of a motor by a belt, a second defoamer impeller (27') disposed on the lower portion of said defoamer shaft (27) and smaller by 1/2 in size than said first defoamer impeller (28), and a first defoamer impeller (28) disposed on the intermediate portion of said defoamer shaft (27).

6. The apparatus of claim 1, wherein:
- said solid-liquid separating and high-speed dehydrating device (100) includes an excretions inlet (110), a water supply pipe (109), a vibrator (101) and a from down to up vibrating plate screen (102);
- on the lower end of the device (100) are provided a separated and dewatered excretions retaining tank (112) and a water pressure sprayer (103) connected to a pipe formed of a SUS net of 2mm.;
- a gas generating screw (104) is formed on the lower portion of the water pressure sprayer (103), and a gas eliminating retaining tank (113) and a discharging water pipe (107) are formed on the lower portion of the gas generating screw (104);
- on a side portion of the above-mentioned parts are provided a screw type high speed dehydrating part (108) and a gas generating screw motor (111), and on the other side portion thereof is provided a gas emitting pipe and fan (105).

## Patentansprüche

1. Schlammbehandlungsapparat in einem oxidierten Flotierweg mit gelöster Luft, wobei der Apparat Folgendes umfasst:
- ein Feststoff-Flüssigkeitstrennungs- und Hochgeschwindigkeitsentwässerungsgerät (100), das die Exkrete, die aus einem Stall in einen Sammelbrunnen abgelassen werden, in dem Wasser zu den Feststoffen und der Flüssigkeit eingefüllt wird, trennt,
- ein Exkretflüssigkeits-Rückhaltebecken (O), das im unteren Abschnitt des Feststoff-Flüssigkeitstrennungs- und Hochgeschwindigkeitsentwässerungsgeräts (100) zum Lagern der abgetrennten Exkretflüssigkeit angeordnet ist,
- ein erstes Behandlungsbecken (P), dem die Exkretbehandlungsflüssigkeit aus dem Exkretflüssigkeits-Rückhaltebecken (O) auf der einen Seite davon zugeleitet wird, das ein Belüftungsgerät (5) aufweist, in dem zwei Belüftungspumpen (5-1) und eine Förderpumpe (2A) in parallelem Verhältnis zu einander im unteren Abschnitt des Inneren des ersten Behandlungsbeckens (P) angeordnet sind, das eine Schlammförderröhre (9) aufweist, die im oberen Abschnitt davon angeordnet ist, zum Verbinden mit einem ersten Entschäumer (11A-1), der ein Nebelflotationsbehandlungsgerät (12) aufweist, das im oberen Abschnitt davon zum Anschließen an die Förderpumpe (2A) durch eine Förderröhre (4) angeordnet ist und eine Überleitröhre (10-1) zum Fördern des behandelten Schlamms zu einem zweiten Behandlungsbecken (Q) aufweist; wobei das zweite Behandlungsbecken (Q) ein Belüftungsgerät (5) aufweist, in dem eine Belüftungspumpe (5-1) und eine Förderpumpe (2A) in parallelem Verhältnis zu einander im unteren Abschnitt des Inneren davon angeordnet sind, das eine Schlammförderröhre (9) aufweist, die im oberen Abschnitt davon angeordnet ist, zum Verbinden mit einem zweiten Entschäumer (11A-2), der ein Nebelflotationsgerät (12) aufweist, das im oberen Abschnitt davon zum Anschließen an die Förderpumpe (2A) durch eine Förderröhre (4) angeordnet ist und eine Überleitröhre (10-2) zum Fördern des behandelten Schlamms zu einem dritten Behandlungsbecken (R) aufweist; wobei das dritte Behandlungsbecken (R) eine Belüftungspumpe (5-1) aufweist, die im unteren Abschnitt des Inneren davon angeordnet ist, eine Schlammförderröhre (9) aufweist, die im oberen Abschnitt davon angeordnet ist zum Verbinden mit einem dritten Entschäumer (11A-3) und ein Nebelflotationsbehandlungsgerät (12) aufweist, das auf der einen Seite des oberen Abschnitts davon angeordnet ist;
- ein Gerät zur Entfernung von Flotationsschlamm mit gelöster Luft (400A), das im Inneren eines Flotationsbehandlungsbeckens mit gelöster Luft (S) installiert ist, das auf der einen Seite des dritten Behandlungsbeckens (R) gebildet ist, in dem drei unabhängige Einheiten in parallelem Verhältnis zu einander stehen, in denen die entgültigen Schäume und Schlamm behandelt werden, wobei die erste Einheit aus dem ersten Entschäumer (11A-1) und einem Flotationsteil mit gelöster Luft (14-1) besteht, das an das untere Teil des ersten Entschäumers (11A-1) angeschlossen ist, die zweite Einheit aus dem zweiten Entschäumer (11A-2) und einem Flotationsteil mit gelöster Luft (14A-2) besteht, das an das untere Teil des zweiten Entschäumers (11A-2) angeschlossen ist, und die dritte Einheit aus dem dritten Entschäumer (11A-3) und einem Flotationsteil mit gelöster Luft (14A-3) besteht, das an das untere Teil des dritten Entschäumers (11A-3) angeschlossen ist; und
- einem Filtriergerät (500), das am Seitenabschnitt einer niedriger gelegenen Überleitröhre (10-3) angeordnet ist und Aktivkohleschichten (501) und Sandschichten (502), die nacheinander darin gebildet sind, und eine Ablassröhre (18) zum Ablassen der filtrierten Flüssigkeit aufweist.

2. Apparat nach Anspruch 1, wobei das erste Behandlungsbecken (P) mit einem Belüftungsgerät (5) ausgestattet ist, in dem die beiden Belüftungspumpen (5-1) und die eine Förderpumpe (2A) in parallelem Verhältnis zu einander im unteren Abschnitt des Inneren davon angeordnet sind, wobei eine Belüftungsmotorsaugröhre (17) und eine Belüftungszirkulationsröhre (6) jeweils an die eine Seite von jeder der Belüftungspumpen (5-1) darin angeschlossen sind zum Saugen und Zirkulieren der belüfteten Flüssigkeit, wobei eine Ablaufpumpe (7) an die Belüftungszirkulationsröhre (6) im unteren Abschnitt des oberen Abschnitts davon angeschlossen ist, wobei ein Ausflussrohr (16) an der anderen Seite des unteren Abschnitts davon nötigenfalls zum Ablassen der darin eingefüllten Flüssigkeit angeordnet ist, wobei eine Überleitröhre (10-1) an der anderen Seite des Zwischenteils des dortigen oberen Abschnitts zum Führen der belüfteten Flüssigkeit zum zweiten Behandlungsbecken (Q) angeordnet ist, wobei die Schlammbeförderungsröhre (9) auf dem oberen Abschnitt davon positioniert ist, wobei der erste Entschäumer (11A-1) des Flotationsbehandlungsbeckens mit gelöster Luft (S) durch die Schlammbeförderungsröhre (9) angeschlossen ist und wobei das Nebelflotationsbehandlungsgerät (12) auf der anderen Seite des oberen Abschnitts davon angeordnet ist, wobei das Nebelflotationsbehandlungsgerät (12) an die Förderröhre (2A) darin des Belüftungsgeräts (5) durch die Förderröhre (4) an der einen Seite davon angeschlossen ist und Ablassen der behandelten Exkretflüssigkeit zum zweiten danebengelegenen Behandlungsbecken (Q) durch die Förderröhre (4), die an die andere Seite angeschlossen ist.

3. Apparat nach Anspruch 1, wobei das zweite Behandlungsbecken (Q), das auf der einen Seite des Nebelflotationsbehandlungsgeräts (12) des ersten Behandlungsbeckens (P) gebildet ist, die Exkretflüssigkeit, die aus dem ersten Behandlungsbecken (P) durch die Überleitröhre (10-1) fließt, behandelt, wobei das zweite Behandlungsbecken (Q) mit Folgendem ausgestattet ist: mit dem Belüftungsgerät (5), in dem die eine Belüftungspumpe (5-1) und die eine Förderpumpe (2A) in parallelem Verhältnis zu einander im unteren Abschnitts des Inneren davon angeordnet sind, mit einer Belüftungsmotorsaugröhre (17) und einer Belüftungszirkulationsröhre (6), die jeweils an die eine Seite der Belüftungspumpe (5-17) darin angeschlossen sind zum Saugen und Zirkulieren der belüfteten Flüssigkeit, mit einer Ablaufpumpe (7), die an die Belüftungszirkulationspumpe (6) im unteren Abschnitt des oberen Abschnitts davon angeschlossen ist, mit einem Ausflussrohr (16), das an der anderen Seite des unteren Abschnitts davon nötigenfalls zum Ablassen der darin eingefüllten Flüssigkeit angeordnet ist, mit der Überleitröhre (10-1), die an der einen Seite des Zwischenteils des dortigen oberen Abschnitts davon zum Führen der belüfteten Flüssigkeit zum dritten Behandlungsbecken (R) angeordnet ist, mit dem Nebelflotationsbehandlungsgerät (12), das im oberen Abschnitt davon zum Behandeln der Exkretflüssigkeit, die dorthin fließt, angeordnet ist, mit der Schlammbeförderungsröhre (9), die auf der einen Seite des oberen Abschnitts davon positioniert ist, mit dem zweiten Entschäumer (11A-2) des Flotationsbehandlungsbeckens mit gelöster Luft (S), das durch die Schlammförderpumpe (9) angeschlossen ist, und der Förderröhre (4), die die Förderpumpe (2A) darin an das Nebelflotationsbehandlungsgerät (12) des dritten Behandlungsbeckens (R) neben dem zweiten Behandlungsbecken (Q) anschließt.

4. Apparat nach Anspruch 1, wobei das dritte Behandlungsbecken (R), das auf der einen Seite des zweiten Behandlungsbeckens (Q) gebildet ist, die Exkretflüssigkeit des zweiten Behandlungsbeckens (Q) behandelt, die durch Förderröhre auf der einen Seite (4) des Nebelflotationsbehandlungsgeräts (12) und die Überleitröhre (10-2) fließt, wobei das dritte Behandlungsbecken (R), das mit dem Belüftungsgerät (5) ausgestattet ist, in dem die eine Belüftungspumpe (5-1) im unteren Abschnitt des Inneren davon angeordnet ist, mit einer Belüftungsmotorsaugröhre (17) und einer Belüftungszirkulationsröhre (6) jeweils an die eine Seite der Belüftungspumpe (5-1) darin angeschlossen sind zum Saugen und Zirkulieren der belüfteten Flüssigkeit, wobei eine Ablaufpumpe (7) an die Belüftungszirkulationspumpe (6) im unteren Abschnitt des oberen Abschnitts davon angeschlossen ist, wobei ein Ausflussrohr (16) an der anderen Seite des unteren Abschnitts davon nötigenfalls zum Ablassen der darin eingefüllten Flüssigkeit angeordnet ist, wobei die Schlammförderröhre (9) auf der einen Seite des oberen Abschnitts davon positioniert ist und wobei der dritte Entschäumer (11A-3) des Flotationsbehandlungsbecken mit gelöster Luft (S) durch die Schlammförderröhre (9) angeschlossen ist.

5. Apparat nach Anspruch 1, wobei das Gerät der Flotationsschlammbeseitigung mit gelöster Luft (400A), das in dem Flotationsbehandlungsbecken mit gelöster Luft (S) angeordnet ist, mit Folgendem ausgestattet ist: der ersten Einheit ausge4stattet wird, die den ersten Entschäumer (11A-1), der durch die Schlammförderröhre (9) an das erste Behandlungsbecken (P) und den ersten Flotationsteil mit gelöster Luft (14-1) angeschlossen ist, der im Inneren des Flotationsbehandlungsbeckens mit gelöster Luft (S) angeordnet und an den unteren Abschnitt des ersten Entschäumers (11A-1) durch die die Flotation gelöster Luft induzierende Röhre (14-1) mit der zweiten Einheit, die aus dem zweiten Entschäumer (11A-2) besteht, verbunden ist, der durch die Schlammförderröhre (9) an das zweite Behandlungsbecken (Q) and das zweite Flotationsteil mit gelöster Luft (14A-2) angeschlossen ist, das im Inneren des Flotationsbehandlungsbeckens mit gelöster Luft (S) angeordnet und mit dem unteren Abschnitt des zweiten Entschäumers (11A-2) durch die die Flotation von gelöster Luft induzierende Röhre (14-1) angeschlossen ist, und mit der dritten Einheit ausgestattet ist, die aus dem dritten Entschäumer (11A-3) besteht, der durch die Schlammbeförderungsröhre (9) an das dritte Behandlungsbecken (R) und das dritte Flotationsteil mit gelöster Luft (14A-3) angeschlossen ist, das im Inneren des Flotationsbehandlungsbeckens mit gelöster Luft (S) angeordnet und an den unteren Abschnitt des dritten Entschäumers (11A-2) durch die die Flotation gelöster Luft induzierende Röhre (14-1) angeschlossen ist, wobei das erste Flotationsteil mit gelöster Luft (14A-1), das zweite Flotationsteil mit gelöster Luft (14A-2) und das dritte Flotationsteil mit gelöster Luft (14A-3) unabhängig in parallelem Verhältnis zu einander angeordnet und an die unteren Abschnitte der ersten bis dritten Entschäumer (11A-1 bis 11A-3) durch jede der die Flotation gelöster Luft induzierende Röhre (14-1) angeschlossen sind, wobei jeder der ersten bis dritten Flotationsteile mit gelöster Luft (14A-1 bis 14A-3) mit einer Flotationskreuzröhre mit gelöster Luft (14-2) ausgestattet ist, die an die die Flotation gelöster Luft induzierene Röhre (14-1) angeschlossen ist, eine untere Flotationskreuzröhre mit gelöster Luft (14-3), die sich von dem unteren Abschnitt der Flotationskreuzröhre mit gelöster Luft (14-2) erstreckt und sich in den unteren Abschnitt davon öffnet, einer Flotationsdoppelröhre mit gelöster Luft (14-4), die eine doppelte Form zum Umgeben der Flotationskreuzröhre mit gelöster Luft (14-2) aufweist und sich in den unteren Abschnitt davon öffnet, und eine Abdeckung (14-5), die auf der Außenseite der Flotationsdoppelröhre mit gelöster Luft (14-4) gebildet ist, wobei jeder der ersten bis dritten Entschäumer (11A-1 bis 11A-3) mit einer Entschäumerwelle (27) ausgestattet ist, die an ein Entschäumerbandverbindungsloch (25) eines Motors durch ein Band angeschlossen ist, ein Laufrad eines zweiten Entschäumers (27') auf dem unteren Abschnitt der Entschäumerwelle (27) angeordnet und halb so groß ist wie das Laufrad des ersten Entschäumers (28), und ein Laufrad der ersten Entschäumers (28) auf dem Zwischenabschnitt der Entschäumerwelle (27) angeordnet ist.

6. Apparat nach Anspruch 1, wobei:
- das Feststoff-Flüssigkeitstrennungs- und Hochgeschwindigkeitsentwässerungsgerät (100) einen Exkreteinlass (110), eine Wasserspeiseröhre (109), einen Rüttler (101) und ein von unten nach oben vibrierendes Plattensieb (102) umfasst;
- am unteren Ende des Geräts(100) ein getrenntes und entwässertes Exkretaufnahmebecken (112) und ein Wasserdrucksprühgerät (103), das an eine Röhre angeschlossen ist, die aus einem SUS-Netz von 2 mm gebildet ist, bereitgestellt sind;
- eine Gaserzeugungsschnecke (104)im unteren Abschnitt des Wasserdrucksprühgeräts (103) gebildet ist und ein Gaseliminationshaltetank (113) und eine ablassende Wasserröhre (107) im unteren Abschnitt der Gaserzeugungsschnecke (104) gebildet sind;
- in einem Seitenabschnitt der oben erwähnten Teile ein Hochgeschwindigkeitshydratisierteil (108) und ein gaserzeugender Schneckenmotor (111) und im anderen Seitenabschnitt davon eine Gasabgaberöhre und ein Gebläse (105) bereitgestellt sind.

## Revendications

1. Appareil de traitement des boues selon un procédé de flottation par air oxydé et dissous, ledit appareil comprenant :
- un dispositif de séparation solide-liquide et de déshydratation à vitesse élevée (100) qui sépare les excrétions déchargées d'une étable à un réservoir collecteur, dans lequel de l'eau immerge les solides et le liquide,
- un réservoir de retenue de liquide d'excrétions (O) disposé sur la portion inférieure du dispositif de séparation solide-liquide et de déshydratation à vitesse élevée (100), pour stocker le liquide d'excrétions séparé,
- un premier réservoir de traitement (P), dans lequel on fait passer un liquide de traitement d'excrétions provenant du réservoir de retenue de liquide d'excrétions (O) sur un de ses côtés, ayant un dispositif d'aération (5), dans lequel deux pompes d'aération (5-1) et une pompe de transport (2A) sont disposées en relation parallèle mutuelle dans la portion inférieure de l'intérieur du premier réservoir de traitement (P), ayant une conduite de déplacement de boues (9) disposée sur sa portion supérieure pour se raccorder à un premier dispositif antimousse (11A-1), ayant un dispositif de traitement de flottation par brouillard (12) disposé sur sa portion supérieure pour se raccorder à ladite pompe de transport (2A) par une conduite de transport (4), et ayant une conduite-passerelle (10-1) pour transporter les boues traitées vers un deuxième réservoir de traitement (Q) ; ledit deuxième réservoir de traitement (Q) ayant un dispositif d'aération (5), dans lequel une pompe d'aération (5-1) et une pompe de transport (2A) sont disposées en relation parallèle mutuelle dans sa partie inférieure, ayant une conduite de déplacement de boues (9) disposée sur sa portion supérieure pour se raccorder à un deuxième dispositif antimousse (11A-2), ayant un dispositif de traitement de flottation par brouillard (12) disposé sur sa partie supérieure pour se raccorder à ladite pompe de transport (2A) par une conduite de transport (4), et ayant une conduite-passerelle (10-2) pour transporter les boues traitées vers un troisième réservoir de traitement (R) ; ledit troisième réservoir de traitement (R) ayant une pompe d'aération (5-1) disposée dans la portion inférieure de son intérieur, ayant une conduite de déplacement de boues (9) disposée sur sa partie supérieure pour se raccorder à un troisième dispositif antimousse (11A-3) et ayant un dispositif de traitement de flottation par brouillard (12) disposé sur l'un des côtés de sa portion supérieure ;
- un dispositif d'élimination de boues par flottation d'air dissous (400A) installé à l'intérieur d'un réservoir de traitement de flottation d'air dissous (S), qui est formé sur le premier côté dudit troisième réservoir de traitement (R), dans lequel il y a trois unités indépendantes en relation parallèle mutuelle, dans lesquelles des mousses et des boues finales sont traitées, laquelle première unité est composée dudit premier dispositif antimousse (11A-1) et d'une partie de flottation par air dissous (14A-1) qui est raccordée à la partie inférieure dudit premier dispositif antimousse (11A-1), laquelle deuxième unité est composée dudit second dispositif antimousse (11A-2) et d'une partie de flottation par air dissous (14A-2) qui est raccordée à la partie inférieure dudit deuxième dispositif antimousse (11A-2) et laquelle troisième unité est composée dudit troisième dispositif antimousse (11A-3) et d'une partie de flottation par air dissous (14A-3) qui est raccordée à la partie inférieure dudit troisième dispositif antimousse (11A-3) ; et
- un dispositif de filtration (500) qui est disposé sur la portion latérale d'une conduite-passerelle inférieure (10-3) et qui présente des couches de charbon actif (501) et des couches de sable (502), qui y sont formées tour à tour, et une conduite de décharge (18) pour décharger le liquide filtré.

2. Appareil selon la revendication 1, dans lequel ledit premier réservoir de traitement (P) est équipé dudit dispositif d'aération (5), dans lequel lesdites deux pompes d'aération (5-1) et ladite une pompe de transport (2A) sont disposées en relation parallèle mutuelle dans la portion inférieure de son intérieur, comprenant une conduite d'aspiration à moteur d'aération (17) et une conduite de circulation d'aération (6), chacune étant raccordée à l'un des côtés de chacune desdites pompes d'aération (5-1) pour y aspirer et faire circuler le liquide aéré, une conduite d'expiration (7) raccordée à ladite conduite de circulation d'aération (6) dans la portion inférieure depuis sa portion supérieure de celle-ci, un drain (16) disposé sur l'autre côté de sa portion inférieure, pour y décharger le liquide qui y est rempli, si nécessaire, une conduite-passerelle (10-1) disposée sur l'un des côtés de la partie intermédiaire de la portion supérieure pour y faire passer le liquide aéré dans ledit deuxième réservoir de traitement (Q), ladite conduite de déplacement de boues (9) placée sur sa portion supérieure, ledit premier dispositif antimousse (11A-1) dudit réservoir de traitement de flottation par air dissous (S) raccordé via ladite conduite de déplacement de boues (9), et ledit dispositif de traitement de flottation par brouillard (12) disposé sur l'autre côté de sa portion supérieure, ledit dispositif de traitement de flottation par brouillard (12) étant raccordé à ladite conduite de transport (2A) dudit dispositif d'aération (5) par ladite conduite de transport (4) sur l'un de ses côtés et déchargeant le liquide d'excrétions traité dans ledit deuxième réservoir de traitement (Q) qui lui est adjacent, par ladite conduite de transport (4) raccordée à son autre côté.

3. Appareil selon la revendication 1, dans lequel ledit deuxième réservoir de traitement (Q), qui est formé sur l'un des côtés dudit dispositif de traitement de flottation par brouillard (12) dudit premier réservoir de traitement (P), traite le liquide d'excrétions qui s'écoule dudit premier réservoir de traitement (P) au moyen de ladite conduite-passerelle (10-1), ledit deuxième réservoir de traitement (Q), qui est équipé dudit dispositif d'aération (5), dans lequel ladite une pompe d'aération (5-1) et ladite une pompe de transport (2A) y sont disposées en relation parallèle mutuelle dans la portion inférieure de son intérieur, d'une conduite d'aspiration à moteur d'aération (17) et d'une conduite de circulation d'aération (6), chacune étant raccordée sur l'un des côtés de ladite pompe d'aération (5-1) pour aspirer et faire circuler le liquide aéré, d'une conduite d'expiration (7) raccordée à ladite conduite de circulation d'aération (6) dans la portion inférieure de sa portion supérieure, d'un drain (16) disposé sur l'autre côté de sa partie inférieure pour décharger le liquide, qui y est rempli, si nécessaire, de ladite conduite-passerelle (10-2) disposée sur l'un des côtés de la partie intermédiaire de sa portion supérieure, pour faire passer le liquide aéré dans ledit troisième réservoir de traitement (R), d'un dispositif de traitement de flottation par brouillard (12) disposé sur sa portion supérieure, pour traiter le liquide d'excrétions qui s'en écoule, d'une conduite de transport de boues (9) placée sur l'un des côtés de sa portion supérieure, dudit deuxième dispositif antimousse (11A-2) dudit réservoir de traitement de flottation par air dissous (S) raccordé via ladite conduite de transport de boues (9), et de ladite conduite de transport (4), raccordant ladite pompe de transport (2A) audit dispositif de traitement de flottation par brouillard (12) dudit troisième réservoir de traitement (R) qui est adjacent audit deuxième réservoir de traitement (Q).

4. Appareil selon la revendication 1, dans lequel ledit troisième réservoir de traitement (R), qui est formé sur l'un des côtés dudit deuxième réservoir de traitement (Q), traite le liquide d'excrétions dudit deuxième réservoir de traitement (Q) s'écoulant à travers ladite une conduite de transport latérale (4) dudit dispositif de traitement de flottation par brouillard (12) et ladite conduite-passerelle (10-2), ledit troisième réservoir de traitement (R) étant équipé dudit dispositif d'aération (5), dans lequel ladite une pompe d'aération (5-1) est disposée dans sa portion inférieure, d'une conduite d'aspiration à moteur d'aération (17) et d'une conduite de circulation d'aération (6), chacune étant raccordée sur l'un des côtés de ladite pompe d'aération (5-1), pour aspirer et faire circuler le liquide aéré, d'une conduite d'expiration (7) raccordée à ladite conduite de circulation d'aération (6) dans la portion inférieure de sa portion supérieure, d'un drain (16) disposé sur l'autre côté de sa portion inférieure, pour décharger le liquide qui y est rempli, si nécessaire, de ladite conduite de transport de boues (9) placée sur l'un des côtés de sa portion supérieure, et dudit troisième dispositif antimousse (11A-3) dudit réservoir de traitement de flottation par air dissous (S) qui est raccordé via ladite conduite de transport de boues (9).

5. Appareil selon la revendication 1, dans lequel ledit dispositif d'élimination de boues par flottation par air dissous (400A), qui est disposé dans ledit réservoir de traitement de flottation par air dissous (S), est équipé de la première unité qui est constituée dudit premier dispositif antimousse (11 A-1) raccordé au moyen de ladite conduite de déplacement de boues (9) au premier réservoir de traitement (P) et de ladite première partie de flottation par air dissous (14A-1) disposée à l'intérieur dudit réservoir de traitement de flottation par air dissous (S) et raccordée à la portion inférieure dudit premier dispositif antimousse (11A-1) par ladite conduite (14-1) induisant la flottation par air dissous, de la deuxième unité qui est constituée dudit deuxième dispositif antimousse (11A-2) raccordé au moyen de ladite conduite de déplacement de boues (9) audit deuxième réservoir de traitement (Q) et de ladite deuxième partie de flottation par air dissous (14A-2) disposée à l'intérieur dudit réservoir de traitement de flottation par air dissous (S) et raccordée à la partie inférieure dudit deuxième dispositif antimousse (11A-2) par la conduite (14-1) induisant une flottation par air dissous, et de la troisième unité qui est constituée dudit troisième dispositif antimousse (11A-3) raccordé au moyen de ladite conduite de déplacement de boues (9) audit troisième réservoir de traitement (R) et de ladite troisième partie de flottation par air dissous (14A-3) disposée à l'intérieur dudit troisième réservoir de traitement de flottation par air dissous (S) et raccordée à la portion inférieure dudit troisième dispositif antimousse (11 A-2) par ladite conduite (14-1) induisant une flottation par air dissous, ladite première partie de flottation par air dissous (14A-1), ladite deuxième partie de flottation par air dissous (14A-2) et ladite troisième partie de flottation par air dissous (14A-3) aménagées indépendamment en relation parallèle mutuelle et raccordées aux portions inférieures desdits premier au troisième dispositifs antimousse (11A-1 à 11A-3) au moyen de chacune desdites conduites (14-1) induisant une flottation par air dissous, chacune desdites première à troisième parties de flottation par air dissous (14A-1 à 14A-3) étant équipée d'une conduite transversale de flottation par air dissous (14-2) raccordée à ladite conduite (14-1) induisant une flottation par air dissous, d'une conduite transversale inférieure de flottation par air dissous (14-3), qui s'étend de la portion inférieure de ladite conduite transversale de flottation par air dissous (14-2) et qui est ouverte sur sa portion inférieure, d'une conduite double de flottation par air dissous (14-4) ayant une forme double pour entourer la conduite transversale de flottation par air dissous (14-2) et qui est ouverte sur sa portion inférieure, et d'un couvercle formé à l'extérieur de ladite conduite double de flottation par air dissous (14-4), chacun desdits premier à troisième dispositifs antimousse (11A-1 à 11A-3) étant équipé d'un arbre de dispositif antimousse (27), qui est raccordé à un orifice (25) de raccordement de courroie de dispositif antimousse d'un moteur par le biais d'une courroie, d'une deuxième hélice de dispositif antimousse (27'), qui est disposée sur la portion inférieure dudit arbre de dispositif antimousse (27) et qui est moitié moins grande que ladite première hélice de dispositif antimousse (28), et d'une première hélice de dispositif antimousse (28) qui est disposée sur la portion intermédiaire dudit arbre de dispositif antimousse (27).

6. Appareil selon la revendication 1, dans lequel :
- ledit dispositif de séparation solide-liquide et de déshydratation à vitesse élevée (100) comprend une entrée d'excrétions (110), une conduite d'alimentation en eau (109), un vibrateur (101) et un écran (102) à plaque vibrant de bas en haut ;
- un réservoir de retenue d'excrétions séparées et déshydratées (112) et un pulvérisateur sous pression d'eau (103), qui est raccordé à une conduite formée d'un réseau de type SUS de 2 mm, sont disposés sur l'extrémité inférieure du dispositif (100) ;
- une vis génératrice de gaz (104) est formée sur la portion inférieure du pulvérisateur sous pression d'eau (103) et un réservoir de retenue (113) éliminant les gaz et une conduite d'eau de décharge (107) sont formés sur la portion inférieure de la vis génératrice de gaz (104) ;
- une partie de déshydratation à vitesse élevée de type à vis (108) et un moteur de vis génératrice de gaz (111) sont prévus sur une portion latérale des parties mentionnées ci-dessus, tandis qu'une conduite émettrice de gaz et un ventilateur (105) sont prévus sur l'autre portion latérale de ceux-ci.
